# EUROPÄISCHE PATENTSCHRIFT

(11) **EP 0 528 086 B1**
(45) Veröffentlichungstag und Bekanntmachung des Hinweises auf die Patenterteilung: **04.08.1999**
(21) Anmeldenummer: 91307636.0
(22) Anmeldetag: 19.08.1991
(51) Int. Cl.: H04L 12/64

(54) **Verfahren und Anordnung zur Übermittlung von STM-vermittelten Nachrichten über ATM-Vermittlungsstellen**
Procedure and arrangement for the communication of STM-information through ATM-switching exchanges
Procédé et agencement pour la communication des informations STM à travers des commutateurs ATM

(43) Veröffentlichungstag der Anmeldung: 24.02.1993
(73) Patentinhaber: SIEMENS AKTIENGESELLSCHAFT, 80333 München (DE); MARCONI COMMUNICATIONS LIMITED, Coventry, CV3 1HJ (GB)
(72) Erfinder: Schmidt, Lothar, W-8080 Fürstenfeldbruck (DE); Jugel, Alfred, W-8192 Geretsried (DE); Mallinson, Andy, Poole BH12 1HX (GB); Rau, Peter, Dr., W-8000 München 60 (DE)

(56) Entgegenhaltungen:
- EP-A- 0 119 105
- EP-A- 0 225 714
- EP-A- 0 363 499
- IBM TECHNICAL DISCLOSURE BULLETIN, Band 32, Nr. 5A, Oktober 1989, Seiten 162-164, Armonk, NY, US; "Composite mini-packet switching"
- PROCEEDINGS OF THE IEEE INT. CONF. ON COMMUNICATIONS, Philadelphia, PA, 12. - 15. Juni 1988, Band 3, Seiten 1552-1558; B. SCHAFFER: "Synchronous and asynchronous transfer modes in the future broadband ISDN"

## Beschreibung

Die Erfindung betrifft ein Fernmeldenetz gemäß dem Oberbegriff des Patentanspruchs 1.

Ein derartiges Fernmeldenetz ist als Übergangsstadium zu künftigen Telekommunikations-Netzen zu verstehen, in denen durchgängig der Asynchronous-Transfer-Modus (ATM-Modus) zur Anwendung kommt. Gegenüber den derzeit installierten Fernmeldenetzen, die im Synchronous-Transfer-Modus (STM-Modus) arbeiten, weisen im ATM-Modus arbeitende Fernmeldenetze den wesentlichen Vorteil auf, daß die verfügbare Übertragungskapazität eines Übertragungskanals flexibel für eine Vielzahl von Diensten wie Sprache, Daten, Bildübertragung nutzbar ist und dabei zeit- und bedarfsabhängig einem einzigen Dienst oder einer Vielzahl von Diensten zugeteilt werden kann.

Die Einführung eines universellen Telekommunikationsnetzes auf ATM-Basis kann nur dann erfolgreich sein, wenn die Möglichkeit einer Zusammenarbeit bisher bestehender auf STM-Basis arbeitender, 64 Kb/s-Sprachdienste abwickelnder Fernmeldenetze mit den neu entstehenden, auf ATM-Basis arbeitenden Vermittlungsstellen in wirtschaftlicher Weise möglich ist.

In diesem Zusammenhang ist eine Hybridlösung für ein Fernmeldenetz vorgeschlagen worden, die darauf hinausläuft, bei den Vermittlungsstellen drei funktional getrennte Systemkomponenten vorzusehen. Zum einen nämlich einen sogenannten Cross Connector für den Anschluß von Übertragungsleitungen, über die im STM-Modus Informationen höherer Bitraten, beispielsweise 2 Mb/s übertragen werden, der im wesentlichen die Funktionen eines elektronischen Hauptverteilers übernimmt. Ferner eine Schmalbandvermittlung, die praktisch den derzeitigen Schmalbandvermittlungen für den Anschluß von Anschluß- und Übertragungsleitungen für auf STM-Basis bei einer Bitrate von 64 Kb/s übertragene Informationen entspricht. Schließlich eine Breitbandvermittlung, die auf ATM-Basis, also als Paketvermittlung mit Nachrichtenzellen fester Länge und der Herstellung virtueller Verbindungen arbeitet. Jede der drei Systemkomponenten der Vermittlungsstellen eines solchen Hybridnetzes weist gesonderte Anschlußeinheiten und ein gesondertes Koppelnetz auf. Selbstverständlich ist eine derartige Lösung sehr kosten- und wartungsaufwendig.

Bei dem eingangs erwähnten Fernmeldenetz sind demgegenüber auf ATM-Basis arbeitende universelle Netzknoten vorgesehen, die mit fortschreitendem Netzausbau in ihrer Anzahl immer mehr noch auf STM-Basis arbeitende Netzknoten überwiegen sollen und schließlich als einzige Netzknotenart vorhanden sein werden. Diese universellen Netzknoten weisen nur ein einziges ATM-Koppelnetz für alle drei Anschluß- bzw. Einsatzarten des erwähnten Hybrid-Fernmeldesystems auf. Sie sind ferner mit einheitlichen Schnittstellen und einer zentralen Steuerung versehen und arbeiten mit einheitlicher Wegesuche und einheitlichen Wartungsfunktionen. Dadurch ergeben sich niedrigere Investitionskosten und ein geringerer Wartungsaufwand als bei der erwähnten Hybridlösung. Außerdem ist eine Erweiterbarkeit ohne besonderen Aufwand in der Grundausstattung gegeben.

Um auf STM-Basis herangeführte Informationen in solchen Netzknoten bearbeiten zu können, müssen diese in Schnittstelleneinheiten in ATM-Nachrichtenzellen paketiert und nach Durchgang durch das Koppelfeld wieder depaketiert und in adressierte Zeitschlitze eingeblendet werden, wozu die betreffenden Schnittstellen Paketier-Depaketiereinrichtungen aufweisen. Das Format solcher ATM-Nachrichtenzellen ist schon weitgehend festgelegt, wobei je Nachrichtenzelle außer einem Nachrichtenkopf ein Nutzinformationsfeld vorgesehen ist, das 48 jeweils 8 Bit umfassende Zeitplätze, sogenannte Oktetts, umfaßt, von denen wenigstens eines für weitere Angaben beispielsweise über die Natur der Nachrichtenzelle ausgenutzt sein kann.

Für die Paketierung der jeweils mit 8 Bit kodierten Abtastproben eines Zeitkanals für die Übertragung von 64 K b/s-Sprachinformationen, wird in diesem Fall die Zeitdauer von 47 Abtastpulsrahmen benötigt, so daß zusammen mit dem genannten einen Oktett eine Paketierzeit von 48x125 µs = 6ms erforderlich ist. Das Depaketieren erfordert mit Jitter-Ausgleich ca. 0,25 ms, so daß insgesamt bei der Übertragung in einer Richtung eine Zeitverzögerung von 6,25 ms entsteht.

In heutigen digitalen Fernsprechnetzen sind als Laufzeiten innerhalb der Vermittlungsstellen, die in erster Linie durch die Analog-Digital-Wandlung bzw. Digital-Analog-Wandlung zustandekommten, für Ortsvermittlungsstellen ca. 1,5 ms und für Durchgangsvermittlungsstellen ca. 1,0 ms je Übertragungsrichtung zugelassen, so daß sich für ein Netz, in dem eine Verbindung über maximal drei Ortsvermittlungsstellen und maximal sechs Durchgangsvermittlungsstellen bei einer maximalen Entfernung von etwa 1000 km läuft, eine zulässige Gesamtlaufzeit von höchstens 15 ms je Übertragungsrichtung ergibt. In Großbritannien liegt die höchstzulässige Verzögerungszeit sogar nur bei 12,5 ms, in den USA sind es 17,5 ms je Übertragungsrichtung.

Die Forderungen an die Einhaltung von Laufzeitgrenzwerten dient dazu, die Sprachqualität sicherzustellen, da größere Laufzeiten wegen der Reflektionen der Sprachsignale an den Gabelschaltungen im Teilnehmerendgerät des hörenden Teilnehmers zu spürbaren Echoeffekten führen.

Die vorgenannten, im Zusammenhang mit dem Paketier-Depaketier-Vorgang verbundenen Verzögerungen von 6,25 ms liegen also um ca. 5 ms über der geforderten Laufzeitgrenze für Vermittlungen.

Zur Gewährleistung der geforderten Sprachqualität unter diesen Umständen müßten je Übertragungsrichtung getrennte Echokompensatoren eingesetzt werden. Es müßte darüber hinaus aber auch dafür Sorge getragen sein, daß bei Sprechverbindungen mehrere Netzübergänge, bei denen es jeweils zu der diskutierten Verzögerung durch Paketier-Depaketiervorgänge kommt, vermieden werden, da eine Laufzeitkompensation in der Größenordnung wie sie bei mehrereren Netzübergängen erforderlich wird, mit Echokompensatoren nicht mehr zu bewältigen ist. Dies würde aber eine aufwendige Vermaschung zwischen den STM-Vermittlungsstellen des noch bestehenden STM-Netzes und den ATM-Vermittlungsstellen erfordern, die die Grundlage für das künftige Universalnetz sein sollen.

Im Zusammenhang mit einem Fernmeldenetz der eingangs genannten Art ist daher zum Zwecke der Verringerung der Verzögerungszeiten bei der Paketierung von STM-Sprachinformationen, die mit einer Übertragungsrate von 64 Kb/s übertragen werden, vorgeschlagen worden, die Nachrichtenzellen fester Länge des ATM-Systems nur teilweise mit STM-Nachrichten zu belegen (europäische Patentanmeldung 88 11 57 25.9.) Ein solches Vorgehen bedeutet natürlich eine schlechte Ausnutzung der Übertragungskapazität. Um hier einen gewissen Ausgleich zu schaffen, ist in der genannten Patentanmeldung auch vorgeschlagen worden, den Belegungsgrad der Nachrichtenzellen jeweils beim Verbindungsaufbau entsprechend beim Verbindungsaufbau mit übertragenen Verbindungsaufbau-Informationen verbindungsindividuell festzulegen, und dabei für Fernverbindungen, die über mehrere Vermittlungsstellen führen, klein zu halten, dagegen für Verbindungen im Nahbereich einen größeren Füllungsgrad zuzulassen.

Gerade bei Fernverbindungen ist aber aus wirtschaftlichen Gründen eine hohe Bitrate besonders unerwünscht, da dort der Kostenanteil für die Übertragungstechnik denjenigen für die Vermittlungsstellen überwiegt. Davon abgesehen, erfordern natürlich die genannten Maßnahmen zur Verbesserung der Übertragungskapazitätsausnutzung steuerungsmäßig einen beträchtlichen Aufwand.

Bei einem anderen bekannten Hybrid-Fernmeldenetz (Proc. of the IEEE Int. Conf. on Communications, Philadelphia, US, 12-15 Juni 1988, Band 3, Seiten 1552-1558, B. Schaffer) wird versucht, das Problem der Paketierverzögerungen dadurch zu entschärfen, daß mit kürzeren Zellen gearbeitet wird, als sie für reinen ATM-Betrieb vorgesehen sind, für den, wie angeführt, schon Normungen existieren. Verbindungen zwischen STM-Vermittlungen, die über eine ATM-Vermittlung führen, werden hierbei genauso behandelt, wie Verbindungen, bei denen die Übertragung von STM-Informationen in ATM-Vermittlungen bzw. einem ATM-Endgerät enden.

Es ist ferner ein Vermittlungsnetz bekannt (EP-A-225 714), bei dem die einzelnen Vermittlungsknoten durch eine Ringleitung miteinander verbunden sind. Einer oder mehrere dieser Knoten enthält eine Paketier-/Depaketiereinrichtung. In Vermittlungsknoten, die nicht mit einer solchen Einrichtung versehen sind, werden sogenannte Composite-Zellen gebildet, deren Oktetts Fernmeldeinformationen aufnehmen, die für unterschiedliche Vermittlungsziele bestimmt sind. In einem der mit der erwähnten Paketier-/Depaketiereinrichtung versehenen Vermittlungsknoten wird dann eine Umpaketierung in Nachrichtenzellen vorgenommen, die nur noch Informationen führen, die für dasselbe Vermittlungsziel bestimmt sind. Es handelt sich hier allerdings nicht um ein Hybridnetz.

Gemäß einem weiteren Vorschlag für ein Hybridnetz (IBM Technical Disclosure Bulletin, Band 32, Nr. 5A, Oktober 1989, Seiten 162-164, Armonk, NY, US) wird ebenfalls mit Kurzzellen gearbeitet, in denen Informationen für dasselbe Vermittlungsziel paketiert sind.

Die Aufgabe der vorliegenden Erfindung besteht darin, ein Fernmeldenetz der eingangs genannten Art so zu gestalten, daß an den für reinen ATM-Betrieb vorgesehenen Normen für die Zellenlänge und den Zellenaufbau festgehalten werden kann und dennoch im Hinblick auf Paketierverzögerungen bei der Vermittlung von STM-Informationen aufwendige Vermaschungsstrukturen sich weitgehend vermeiden lassen und dabei keine wesentliche Verringerung des Ausnutzungsgrades der vorhandenen Übertragungskapazität für Nutzinformationen hinzunehmen ist.

Diese Aufgabe wird durch die im Kennzeichen des Patentanspruchs angegebenen Mittel gelöst.

Bei dem erfindungsgemäßen Fernmeldenetz wird also im Zusammenhang mit der Durchschaltung von STM-Nachrichten mit Nachrichtenzellen, wie sie für reine ATM-Netze bestimmt sind, dabei jedoch mit unterschiedlichen Belegungen gearbeitet. Wenn nämlich von der betroffenen ATM-Vermittlung aus die Verbindung zu einer weiteren ATM-Vermittlung führt, werden in einer Nachrichtenzelle mehrere aufeinanderfolgende Abtastproben eines einzigen Zeitkanals paketiert und der Aufbau dieser Nachrichtenzelle also zu einer Aufteilung in internen und externen Zellenkopf und Informationsteil entspricht dem vorgeschriebenen Zellenaufbau für den Verkehr zwischen ATM-Vermittlungen. Für die über eine ATM-Vermittlung führende Verbindung zwischen zwei STM-Vermittlungen, für die die Nachrichtenzellen lediglich für die Durchschaltung durch die ATM-Vermittlung benötigt werden, also eine gewisse Freizügigkeit bezüglich des Aufbaus der Nachrichtenzellen besteht, werden hingegen Nachrichtenteile mehrerer Zeitkanäle gemultiplext paketiert, was bedeutet, daß einerseits der Informationsteil der Nachrichtenzellen besser ausgenutzt werden kann als bei dem vorerwähnten vorgeschlagenen Verfahren, bei dem der Paketierungsgrad verbindungsabhängig variabel ist, und dennoch die Paketierungszeit so klein gehalten werden kann, daß der Einsatz von Echokompensatoren sich erübrigt. Da andererseits die Belegung mit Nachrichtenteilen mehrerer Zeitkanäle ohne Rücksicht auf deren Stellung im Pulsrahmenaufbau des STM-Übertragungsmodus erfolgt, kann die Ausnutzung der Nachrichtenzellen vom aktuellen Belegungszustand relativ unabhängig gemacht werden.

Um einen Kompromiß zwischen Auslastung und Verzögerungszeit zu erzielen, werden dabei Nachrichtenzellen schon dann ausgesendet, wenn ein vorgegebener Füllungsgrad erreicht ist und danach eine vorgegebene Wartezeitspanne verstrichen ist.

Nachstehend wird die Erfindung anhand von Ausführungsbeispielen unter Bezugnahme auf eine Zeichnung näher erläutert.
In der Zeichnung zeigen:
Figur 1 das Format einer internen Standardnachrichtenzelle für die Durchschaltung durch Vermittlungsstellen in ATM-Fernmeldenetzen,
Figur 2 das Format von erfindungsgemäß innerhalb einer ATM-Vermittlung für die Durchschaltung von STM-Nachrichten zu STM-Vermittlungen verwendeten Nachrichtenzellen,
Figur 3 einen Teil eines STM-Vermittlungen und ATM-Vermittlungen aufweisenden Fernmeldenetzes.

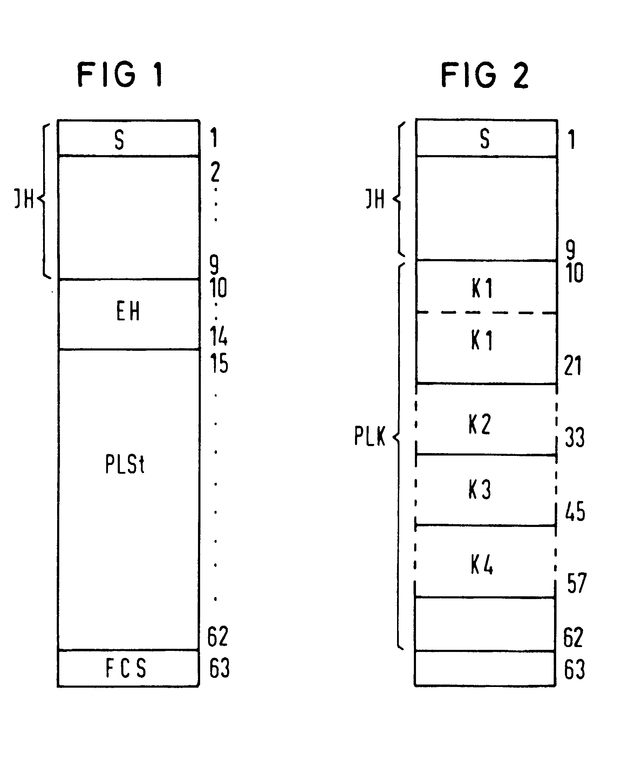

Die Standardnachrichtenzelle gemäß Figur 1 weist insgesamt 63 sogenannte Oktetts, d. h. Zeitplätze für jeweils 8 Bit auf. 9 solcher Oktetts werden für einen internen Zellenkopf IH (Internal Header) eingenommen, der im wesentlichen ein Synchronisationsoktett S, ferner Wegeinformationen für den Weg durch das Koppelnetz enthaltende Oktetts, sowie ein Oktett für eine Zellennummer zur Bestimmung der Zellenreihenfolge enthält. Ein weiterer Zellenkopf, der externe Zellenkopf EH (External Header), umfaßt 5 Oktetts und enthält Angaben über einen virtuellen Kanal und einen virtuellen Verbindungsweg, dem die betreffende Nachrichtenzelle zugeordnet ist.

Es schließt sich ein 48 Oktetts umfassender Informationsteil PLST an, in dem die eigentlichen Fernmeldeinformationen übertragen werden, und schließlich folgt noch ein Oktett FCS, das das Zellenende kennzeichnet.

Der vorerwähnte interne Zellenkopf IH wird nach Durchlaufen einer Vermittlungsstelle vor einer Weiterübertragung der Nachrichtenzelle entfernt, so daß extern in Erscheinung tretende Zellen lediglich aus dem externen Zellenkopf EH und aus dem Informationsteil PLST bestehen.

Bei der in Figur 2 dargestellten Nachrichtenzelle, wie sie erfindungsgemäß für den Durchgang durch ATM-Vermittlungen bei von über eine AT-Vermittlung führenden Verbindungen zwischen STM-Vermittlungen Verwendung finden, ist lediglich ein interner Zellenkopf IH vorhanden, da diese Nachrichtenzellen außerhalb der ATM-Vermittlung nicht in Erscheinung treten. Er umfaßt beim dargestellten Beispiel 8 Oktetts.

Der Informationsteil PLK einer solchen Nachrichtenzelle ist im dargestellten Fall für die paketierten Informationsteile von 4 Zeitkanälen K1 bis K4 ausgenutzt, wobei für jeden Zeitkanal 12 Oktetts zur Verfügung stehen, von denen wiederrum 8 Oktetts für die eigentliche Kanalinformation ausgenutzt werden. Das bedeutet also, daß hier eine Paketierzeit von 8 Pulsrahmen also 8 mal 125mus = 1 ms zustande kommt und damit ein Wert, der im Hinblick auf Echoprobleme noch vertretbar ist.

Die übrigen 4 der 12 für einen Zeitkanal ausgenutzten Oktetts enthalten unter anderem die Kanaladresse sowie gegebenenfalls ein Reihenfolgemerkmal um die richtige Zellenreihenfolge je Kanal zu gewährleisten.

Bei der angenommenen Aufteilung der Nachrichtenzelle gemäß Figur 2, die dieselbe Länge aufweist, wie die Standardnachrichtenzellen des ATM-Systems bleiben vier Oktetts unausgenutzt.

Es sind jedoch im Rahmen dieser vorgegebenen Länge auch noch andere Aufteilungen möglich, beispielsweise können die Kanalinformationen von fünf Zeitkanälen gemultiplext sein, in welchem Falle dann lediglich sieben Oktetts pro Zeitkanal für die Kanalinformation zur Verfügung stehen. In jedem Fall ist es jedoch so, daß in einer Nachrichtenzelle Informationen von Zeitkanälen gemultiplext sind, die zum selben Koppelfeldausgang der ATM-Vermittlung durchgeschaltet werden sollen. Die Reihenfolge der Kanalplätze innerhalb einer Nachrichtenzelle ist erfindungsgemäß hingegen beliebig.

Aufgrund der letztgenannten Freizügigkeit wird die Abhängigkeit des Nutzungsgrades der gemultiplexten Kanäle führenden Nachrichtenzellen von der Verkehrsverteilung verringert. Die Ausnutzung solcher Nachrichtenzellen ist dann am geringsten, wenn bei n Koppelfeldausgängen zu n-1 Ausgängen hin jeweils nur einer der ankommenden Zeitkanäle vermittelt werden soll, wogegen sämtliche übrigen ankommenden Zeitkanäle zu dem verbleibenden einen Ausgang zu vermitteln sind. Es ist dann nämlich nur ein Zeitkanalplatz in einer der erfindungsgemäß vorgesehenen Nachrichtenzellen belegt, die drei restlichen Zusatzkanalplätze bleiben frei. Eine im Hinblick auf die Nachrichtenzellenausnutzung günstige Verkehrsverteilung liegt dann vor, wenn die ankommenden Zeitkanäle gleichmäßig auf sämtliche Koppelfeldausgänge zu verteilen sind.

Um einen Kompromiß zwischen Nachrichtenzellenausnutzung und Verzögerungszeit bei der Zellenbelegung zu erzielen, wird dabei so vorgegangen, daß die Nachrichtenzellen, in denen Nachrichtenteile mehrerer Zeitkanäle gemultiplext paketiert werden, nach Ablauf einer vorgegebenen Wartezeit weitergesendet werden, auch wenn ihr maximaler Füllungsgrad bis dahin nicht erreicht worden ist. Beim vorstehend erläuterten Beispiel, bei dem sich eine Paketierungszeit von 1 ms ergibt, wird eine zusätzliche Wartezeit von 0,5 ms empfohlen, die bei einem für die Praxis realistischen Anschlußwert von 64 mit STM-Vermittlungen verbindenden Übertragungsleitungen zu einem relativ hohen Füllungsgrad der Nachrichtenzellen führt, so daß relativ wenige zusätzliche Nachrichtenzellen gegenüber dem Fall jeweils einer vollständigen Ausnutzung der Nachrichtenzellen durch Kanalinformationen erforderlich sind.

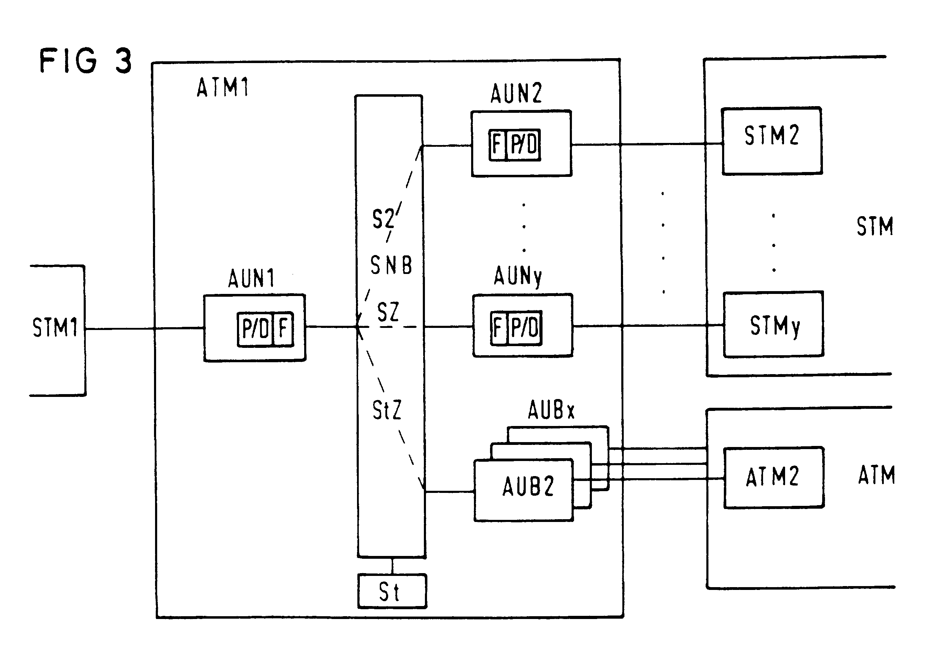

Die Figur 3 zeigt den Ausschnitt aus einem Fernmeldevermittlungsnetz, das sowohl auf ATM-Basis als auch auf STM-Basis arbeitende Vermittlungsstellen umfaßt.

Mit einer mehr ins einzelne gehend dargestellten ATM-Vermittlung ATM1 stehen über Schnittstellen AUN1-AUNy STM-Vermittlungen STM1 bis STMy in Verbindung.

Außerdem besteht eine Verbindung der ATM-Vermittlung ATM1 mit weiteren ATM-Vermittlungen ATM2 bis ATMx über Schnittstellen AUB1 bis AUBx .

Als wesentlicher Bestandteil der ATM-Vermittlung ATM1 sind ein ATM-Breitbandkoppelnetz SNB und eine Vermittlungssteuerung ST dargestellt.

In den Schnittstelleneinheiten AUN1 bis AUNy befinden sich Paketier-/Depaketiereinheiten P/D mit deren Hilfe die codierten Zeitschlitzinhalte der von einer STM-Vermittlung kommenden Kanalinformationen in eine ATM-Nachrichtenzelle eingeordnet werden bzw. ausgangsseitig wieder depaketiert und in Zeitschlitze zur Weiterübertragung zu einer STM-Vermittlung eingeordnet werden.

Formatiereinheiten F dieser Schnittstelleneinheiten sorgen für eine Formatierung von Nachrichtenzellen als Standardzelle oder als erfindungsgemäß gemultiplexte Dateninformationen enthaltende Nachrichtenzellen.

Sofern es sich um Verbindungen handelt, die von einer STM-Vermittlung, also beispielsweise von der STM-Vermittlung STM1, über die ATM-Vermittlung ATM1 zu einer weiteren ATM-Vermittlung, beispielsweise ATM2 führen, werden in der Schnittstelle AUN1 Zellen des Standardformats gebildet, wie es die Figur 1 zeigt. Es wird dabei dem Umstand Rechnung getragen, daß auf Übertragungsstrecken zwischen ATM-Vermittlungen, hier also zwischen der Schnittstelle AUB1 und der ATM-Vermittlung ATM2 das genormte ATM-Übertragungsprotokoll eingehalten sein muß. Sofern es sich jedoch um Verbindungen zwischen zwei STM-Vermittlungen handelt, also beispielsweise Verbindungen zwischen der Vermittlung STM1 und der Vermittlung STM2, die über die ATM-Vermittlung ATM1 geführt werden sollen, werden erfindungsgemäß in der Schnittstelle AUN1 Nachrichtenzellen gemäß Figur 2 gebildet, die im günstigsten Belegungsfall Zeitschlitzinhalte von beispielsweise 4 Zeitkanälen enthalten, die alle in dieselbe Verbindungszielrichtung vermittelt, also sämtliche zu dem mit der Schnittstelle AUN2 verbundenen Koppelfeldausgang des Breitbandkoppelfeldes SNB durchgeschaltet werden sollen. In dieser Schnittstelle AUN2 erfolgt eine Depaketierung und Wiedereinordnung der Zeitkanalinhalte in Zeitschlitze des betreffenden Zeitkanals, dessen Adresse ebenfalls im Informationsteil der Nachrichtenzelle enthalten ist. Die genannte Nachrichtenzelle findet also lediglich innerhalb der ATM-Vermittlung Verwendung, womit keine Verstöße gegen vorgegebene Protokolle entstehen. Andererseits ist, wie gewünscht vermieden, daß beim Paketieren unzulässig hohe Verzögerungszeiten entstehen, wozu hier auch noch beiträgt, daß wenn während einer betrachteten Zeitspanne nicht ausreichend viele Kanäle vorliegen, die zu der Vermitt-lungsstelle STM2 hin vermittelt werden sollen, die Nachrichtenzellen auch schon vor Erreichen ihres maximalen Füllungsgrades nach Ablauf einer vorgegebenen Wartezeit von der Schnittstelle AUN1 an das Koppelfeld weitergegeben werden. Bei dem in diesem Zusammenhang entstehenden Verzögerungszeiten von 1 ms Paketierzeit, 0, 5 ms Wartezeit und 0,25 ms Depaketierzeit sind die insgesamt im Zuge einer durchschnittlichen Verbindung entstehenden Zeitverzögerungen noch klein genug um nicht zu den vorstehend erwähnten unzulässigen Echoeffekten führen zu können.

## Patentansprüche

1. Fernmeldenetz, dessen Vermittlungsstellen (ATM, STM) in vorzugsweise überwiegender Anzahl auf der Basis asynchroner Durchschaltung von Nachrichtenpaketen in Nachrichtenzellen fester Länge über virtuelle Verbindungen (ATM-Vermittlungen) und vorzugsweise geringer Anzahl auf der Basis synchroner leitungsvermittelter Durchschaltung arbeiten (STM-Vermittlungen), mit den ATM-Vermittlungen zugeordneten Schnittstellen, die dem Anschluß von mit STM-Vermittlungen (STM) verbindenden, leitungsvermittelten Nachrichten führenden Übertragungsleitungen dienen und die Paketier-/Depaketiereinrichtungen (P/D) enthalten, die die leitungsvermittelt ankommenden Nachrichten, die über eine ATM-Vermittlung (z. B. ATM1) zu einer weiteren ATM-Vermittlung (z. B. ATM2) oder zu einem für den Empfang von asynchron durchgeschalteten Nachrichtenpaketen ausgestattetem Endgerät (ATM-Endgerät) durchgeschaltet werden sollen, zeitkanalweise in Nachrichtenzellen derselben Länge und desselben Aufbaus paketieren, wie sie in reinen ATM-Netzen ohne Rücksicht auf die Vermittlung von STM-Informationen Verwendung finden können, **dadurch gekennzeichnet**, daß die Paketier-/Depaketiereinrichtungen derartig ergänzt sind, daß sie von STM-Vermittlungen (z. B. STM1) stammende STM-Informationen, die über eine ATM-Vermittlung (z. B. ATM1) wieder zu einer STM-Vermittlung (z. B. STM2) durchgeschaltet werden sollen, für die Durchschaltung durch die ATM-Vermittlung (ATM1) in Nachrichtenzellen ebenfalls derselben Länge paketieren, wobei jedoch jeweils Nachrichtenteile mehrerer ankommender Zeitkanäle, die zum selben einem Vermittlungsziel zugeordneten Koppelfeldausgang der ATM-Vermittlung (ATM1) durchgeschaltet werden sollen, ohne Rücksicht auf deren Stellung im Pulsrahmenaufbau des STM-Übertragungsmodus gemultiplext sind und wobei schon vor Erreichen des maximalen Füllungsgrades einer Nachrichtenzelle deren Weitersendung an das Koppelfeld der ATM-Vermittlung (ATM1) veranlaßt wird, wenn eine vorgegebene Wartezeit verstrichen ist.

## Claims

1. Telecommunications network, the majority of whose exchanges (ATM, STM) preferably operate on the basis of asynchronous switching through of telecommunications packets in telecommunications cells of fixed length on virtual links (ATM exchanges) and the minority of which preferably operate on the basis of synchronous switching through of lines (STM exchanges), having interfaces which are assigned to the ATM exchanges and which serve to connect transmission lines which connect to STM exchanges (STM) and carry line-switching messages, and which contain packetizing/depacketizing devices (P/D) which packetize the messages which are received through line switching and which are intended to be switched through via an ATM exchange (for example ATM1) to a further ATM exchange (for example ATM2) or to a terminal (ATM terminal) which is equipped to receive asynchronously switched-through message packets, said packetizing being carried out on a time slot basis in message cells of the same length and of the same structure as can be used in pure ATM networks without regard to the switching of STM information, characterized in that the packetizing/depacketizing devices are supplemented in such a way that they packetize STM information which originates from STM exchanges (for example STM1) and is intended to be switched through via an ATM exchange (for example ATM1), again to an STM exchange (for example STM2), for it to be switched through the ATM exchange (ATM1) in message cells which are also of the same length, in which case, however, in each case message components are a plurality of incoming time slots which are intended to be switched through to the same switching matrix output, assigned to a switching destination, of the ATM exchange (ATM1), are multiplexed without regard to the position of said time slots in the pulse frame structure of the STM transmission mode and, even before the maximum filling level of a message cell is reached, and in which case its transmission to the switching matrix of the ATM exchange (ATM1) is brought about if a predefined waiting time has expired.

## Revendications

1. Réseau de télécommunication dont les centres de commutation (ATM, STM) fonctionnent, de préférence pour un nombre majoritaire d'entre eux, sur la base d'une transmission asynchrone de paquets d'informations dans des cellules d'informations de longueur constante par l'intermédiaire de liaisons virtuelles (commutations ATM) et, de préférence pour un plus petit nombre d'entre eux, sur la base d'une transmission synchrone à commutation de lignes (commutations STM), avec des interfaces qui sont associées aux commutateurs ATM, qui servent au raccordement de lignes de transmission reliant des commutateurs de type STM (STM) et conduisant des informations avec commutation de lignes et qui contiennent des dispositifs d'assemblage et de désassemblage de paquets (P/D), lesquels dispositifs assemblent en paquets les informations arrivant selon une commutation de lignes et devant être transmises directement par l'intermédiaire d'un commutateur ATM (par exemple ATM1) vers un autre commutateur ATM (par exemple ATM2) ou vers un terminal (terminal ATM) équipé pour la réception de paquets d'informations transmis de façon asynchrone, cet assemblage étant effectué canal temporel par canal temporel dans des cellules d'informations ayant la même longueur et la même structure que celles qui peuvent être utilisées dans de purs réseaux ATM sans tenir compte de la commutation d'informations STM, caractérisé par le fait que les dispositifs d'assemblage et de désassemblage de paquets sont complétés de manière à assembler en paquets des informations STM, qui proviennent de commutateurs STM (par exemple STM1) et qui doivent être transmises directement par l'intermédiaire d'un commutateur ATM (par exemple ATM1) à un commutateur STM (par exemple STM2), dans des cellules d'informations également de la même longueur pour la transmission directe à travers le commutateur ATM (ATM1), de telle sorte toutefois que des parties d'informations de plusieurs canaux temporels arrivants qui doivent être transmises directement à la même sortie de réseau de connexion, associée à une destination de commutation, du commutateur ATM (ATM1) sont multiplexées sans tenir compte de leur position dans la structure de trame d'impulsion du mode de transmission STM et de telle sorte que, avant même que le taux de remplissage maximal d'une cellule d'informations soit atteint, la retransmission de celle-ci au réseau de connexion du commutateur ATM (ATM1) est déclenchée si un temps d'attente prescrit est écoulé.
